# DEMANDE DE BREVET EUROPEEN

(11) **EP 0 905 661 A1**
(43) Date de publication de la demande: **31.03.1999**
(21) Numéro de dépôt: 98450015.7
(22) Date de dépôt: 25.09.1998
(51) Int. Cl.: G07G 1/00, G06F 17/60

(54) **Procédé et dispositif de traitement d'informations, notamment de coupons de réduction**

(30) Priorité: 25.09.1997 FR 9712165
(71) Demandeur: C.2.B. Limited, London (GB)
(72) Inventeur: Berard, Jean, 33370 Artigues pres Bordeaux (FR); Bertrand, André, F-13400 Aubagne (FR)
(74) Mandataire: Thébault, Jean-Louis

(57) **Abrégé**

- L'objet de l'invention concerne un procédé de traitement d'informations, plus particulièrement de bons de réduction, dans les magasins de distribution durant le passage en caisse (10) des achats d'un consommateur muni d'une carte à puce (14) portant en plus des informations d'identification, un ensemble de codes à barres correspondant à des produits bénéficiant de bons de réduction, ladite caisse (10) étant équipée d'un terminal de paiement électronique (12), TPE, pour les règlements par carte bancaire. Selon l'invention le TPE est utilisé pour détecter les produits durant l'encaissement qui bénéficient d'une réduction et pour émettre un feuillet double totalisateur des réductions dont bénéficie le consommateur.
- L'invention couvre aussi le dispositif associé et notamment la mise en place d'une borne de chargement in situ.

## Description

La présente invention concerne un procédé de traitement d'informations, notamment de coupons de réduction sur des produits de consommation. L'invention concerne aussi le dispositif de traitement associé.

Dans les commerces de distribution, plus particulièrement dans les grandes surfaces, hypermarchés et autres grands magasins, compte tenu des quantités importantes des produits vendus, le traitement des informations de ces coupons de réduction est un problème important.

En effet, les industriels ou les centrales d'achat qui assurent la commercialisation des produits de consommation sont amenés à faire des promotions sur certains de leurs produits en sorte de faire porter l'attention des acheteurs sur ces produits pour un lancement, pour une relance ponctuelle de la consommation, pour une question de mode ou encore pour des raisons dues à la saison.

Ces promotions se traduisent généralement par des bons de réduction à valoir sur les prochains achats de ces produits ou des produits de la gamme.

Ces bons de réduction se présentent sous forme papier, carton ou feuille en matière plastique et sont attribués aux acheteurs de plusieurs façons.

En effet, ces bons sont :
- découpés dans des journaux achetés,
- découpés dans des feuillets publicitaires distribués ou envoyés,
- découpés dans l'emballage ou décollés à partir de l'étiquette d'un premier produit acheté,
- distribués directement dans les magasins, pour ne citer que les moyens les plus courants.

Ces bons ont une valeur marchande donnée et doivent être présentés à l'hôtesse de caisse pour tout achat du produit correspondant.

C'est là que le traitement de cette information portée sur ledit bon, sous forme semi-automatique, pose des problèmes, surtout pour le distributeur.

En effet, l'hôtesse de caisse établit la valeur de l'ensemble des produits. Ceci est généralement réalisé grâce à des scanners qui lisent des codes à barres qui permettent un enregistrement automatique du prix. Cette opération d'encaissement est donc grandement améliorée tant du point de vue du gain de temps que de la limitation des risques d'erreur, ce qui est un progrès considérable.

Ensuite, à la fin de l'encaissement mais avant de le clôturer, intervient une opération totalement anachronique avec les progrès réalisés.

En effet, l'acheteur doit présenter les bons de réduction. L'hôtesse de caisse est censée vérifier que ces bons correspondent bien à des produits qui viennent d'être achetés et c'est déjà une première porte ouverte aux erreurs ou à la fraude. Cette opération est fastidieuse si la liste des achats est très longue puisque le seul moyen est de vérifier sur la liste des produits encaissés. Ce phénomène qui consiste à associer un coupon de réduction avec un produit analogue ou un tout autre produit est dénommé "mis-rédemption" dans la profession.

Ensuite les valeurs des bons sont tapées manuellement sur la caisse pour venir en déduction du coût total de la note de caisse, sans écrit pour la vérification, deuxième porte ouverte aux erreurs ou à la fraude.

L'hôtesse de caisse note ensuite le numéro de caisse sur les bons et les dispose dans un logement de sa caisse qui doit être adapté à tous les formats et qui se résume bien souvent à une pochette, ce qui est surprenant quand on sait que même le tiroir de la caisse qui contient la monnaie ou les chèques est à ouverture automatique.

Quant au consommateur concerné, il attend mais les consommateurs suivants aussi.

Enfin la note est imprimée, le consommateur paye, souvent au moyen d'une carte de crédit. Cette opération est assez rapide car il existe des lecteur/enregistreurs de cartes performants associés à la caisse, ce qui fait encore plus ressortir l'anachronisme du traitement de l'information portée par les bons de réduction.

Il se trouve que le problème se prolonge par le traitement de cette information portée par les bons de réduction.

Ces bons sont généralement traités par des sociétés extérieures qui assurent plusieurs fonctions.

D'une part, ces sociétés reçoivent les montants bruts des écarts caisses, chaque jour à la fermeture et assurent la totalisation des valeurs des bons afin de distinguer l'écart caisse réel de celui imputable aux bons de réduction. On note que ce travail prend quelques heures voire quelques jours si bien que le distributeur reste dans l'attente de ces informations pour clore ses comptes et connaître avec précision le montant du chiffre d'affaires du jour correspondant.

D'autre part, ces sociétés assurent le remboursement du distributeur pour un montant équivalent aux bons de réductions, c'est la phase dite de "compensation". Par ailleurs, ces sociétés se font ensuite ou préalablement remboursées par les industriels ou les centrales d'achat à l'origine de la promotion, en ajoutant le montant de leurs prestations pour le travail effectué.

Ce traitement de l'information est particulièrement peu sophistiqué à cause des moyens de collecte de ces bons et de la nature des bons eux-mêmes. De plus, il ne permet pas d'obtenir une traçabilité avec des précisions statistiques sur les habitudes des consommateurs, comme les heures d'achat par exemple, ou le type de consommateur puisqu'il n'y a aucun lien entre le consommateur et les bons de réduction.

En outre, les opérations qui ont été décrites sont fastidieuses.

On note que ces moyens impliquent que l'acheteur ait sur lui les différents bons de réduction au moment opportun, ce qui est assez peu souvent le cas ou le bon est au fond d'un sac et il faut le rechercher au dernier moment ou encore, le compte est clos quand ledit acheteur pense à le présenter à l'hôtesse de caisse, si bien que l'effet de cible sur le produit et donc l'effet attractif recherché est obtenu de façon tout à fait partielle.

Un progrès très sensible a été réalisé au moyen d'une présentation de ces bons sous forme de chéquiers de bons ayant un format sensiblement standard, celui des chéquiers portefeuilles. Ceci permet à l'acheteur de disposer de bons tous reliés à une même souche, de pouvoir retrouver le chéquier rapidement ou simplement de penser à le présenter.

Néanmoins le problème du traitement des informations reste strictement le même, si bien que les avantages réalisés au moyen d'une présentation sous forme de chéquier bénéficient directement au client mais ne facilitent pas la tâche du distributeur ou des sociétés de traitement.

Telle que la circulation de l'information vient d'être décrite, on constate aussi le peu de souplesse qu'elle présente notamment pour l'industriel ou la centrale d'achat qui souhaiterait faire une opération sur un produit pendant une période courte ou encore qui souhaiterait faire bénéficier un client fidèle de réductions plus importantes que les autres.

On connaît une demande de brevet européen EP-A-736 849 qui a apporté un progrès certain dans le traitement des données en proposant un dispositif et un traitement d'informations sous forme de codes à barres et portées en partie par une carte à puce. Le dispositif consiste en une carte à puce détenue par le client qui est lue par un lecteur spécifique susceptible de lire et d'écrire sur ladite carte à puce.

Le client présente sa carte à l'hôtesse de caisse et reçoit les bons de réduction puis en fonction des différents achats et des différentes promotions, soit le client reçoit d'autres bons de réduction à valoir sur d'autres articles, soit le client reçoit des points de fidélité dont on établit la valeur, soit encore il s'agit d'une réduction d'un montant fixe et déterminé immédiatement déductible.

Lorsque le montant est déductible ou que les points de fidélité acquis sont dépensés, la réduction est immédiatement portée dans la facture émise par la caisse si bien que les comptes caisse et bons de réduction sont traités simultanément, ce que les distributeurs ne souhaitent en aucune façon.

Dans cette demande de l'art antérieur, il faut aussi que l'ensemble des codes à barres des différents produits existants soit saisi dans une mémoire centrale et surtout qu'il soit réactualisé très régulièrement afin d'affecter les promotions aux produits concernés parmi tous les autres.

L'invention vise à pallier les problèmes qui viennent d'être évoqués ci-avant et notamment à dissocier les comptes réservés aux coupons de ceux réservés aux produits achetés chez le distributeur tout en permettant aux consommateurs de bénéficier directement et immédiatement des réductions acquises.

Dans ce but, le procédé selon l'invention de traitement d'informations, plus particulièrement de bons de réduction, dans les magasins de distribution durant le passage en caisse des achats d'un consommateur muni d'une carte à puce portant en plus des informations d'identification, un ensemble de codes à barres correspondant à des produits bénéficiant de bons de réduction, ladite caisse étant équipée d'un terminal de paiement électronique, TPE, pour les règlements par carte bancaire, se caractérise en ce qu'il comprend les étapes suivantes :
- introduction de la carte à puce dans un TPE, pour lecture et mémorisation des informations portées par la puce de cette carte, notamment l'ensemble des codes à barres des produits bénéficiant de bons de réduction et les valeurs de ces bons,
- lecture au fur et à mesure des codes à barres des produits passant en caisse,
- comparaison des codes et, en cas d'identité du code à barres d'un produit passant en caisse et d'un code à barres mémorisé, écriture au moins de la référence du produit et de sa valeur de réduction,
- totalisation par le TPE des valeurs de réduction en fin d'encaissement,
- émission d'au moins un feuillet portant le total de réduction,
- report en caisse de ce total de réduction,
- émission du ticket de caisse avec déduction du total des réductions, et
- mémorisation des différentes informations concernant cette transaction.

De préférence, on émet un feuillet double portant le total de réduction, l'un conservé en caisse et l'autre fourni au consommateur concerné.

Avantageusement, on lit les codes à barres des produits en caisse au moyen d'un lecteur optique et en ce que l'information lue est transmise simultanément vers la caisse de façon connue mais aussi vers le TPE.

Dans ce cas, on utilise le TPE de règlement par carte bancaire existant dont on modifie les fonctions, à l'exclusion de toute modification du système caisse.

L'invention couvre aussi le dispositif associé qui comprend comprenant au moins une caisse enregistreuse avec des moyens de lecture optique des codes à barres des produits, au moins un TPE pour les règlements par carte bancaire, associé par une première liaison d'une part à ladite caisse et par une seconde liaison d'autre part à un réseau intégrant un concentrateur, caractérisé en ce que ledit TPE relié au concentrateur comprend des moyens supplémentaires de :
- lecture et mémorisation temporaire des informations portées par la puce d'une carte à puce comprenant notamment des informations d'identification, des codes à barres de produits bénéficiant d'une réduction, des valeurs de réductions associées à chacun de ces codes à barres,
- réception des codes à barres des produits lus au cours de l'encaissement ,
- comparaison des codes à barres lus et des codes à barres mémorisés,
- écriture par le TPE, sur au moins un feuillet de la référence du produit et de la valeur de réduction correspondante, en cas d'identité des deux codes lu et mémorisé, et
- totalisation de ces valeurs de réduction en fin de feuillet, à la fin de l'encaissement.

Selon l'invention, le dispositif comprend au moins une borne, disposée de préférence à l'entrée du magasin de distribution et indépendante des réseaux internes, qui comprend un lecteur/enregistreur de cartes à puce, susceptible de lire et d'écrire, afin de charger sur lesdites cartes à puce les codes correspondant aux produits en promotion.

Cette borne comprend également des moyens de liaison avec un centre délocalisé qui gère et met à jour le contenu de la mémoire de la borne.

L'invention est maintenant décrite en regard des dessins annexés correspondant à un mode de réalisation particulier, non limitatif, les différentes figures représentant :
- figure 1, une vue d'un schéma du dispositif permettant de mettre en oeuvre le procédé selon l'invention, et
- figure 2, une vue d'un schéma d'un dispositif perfectionné.

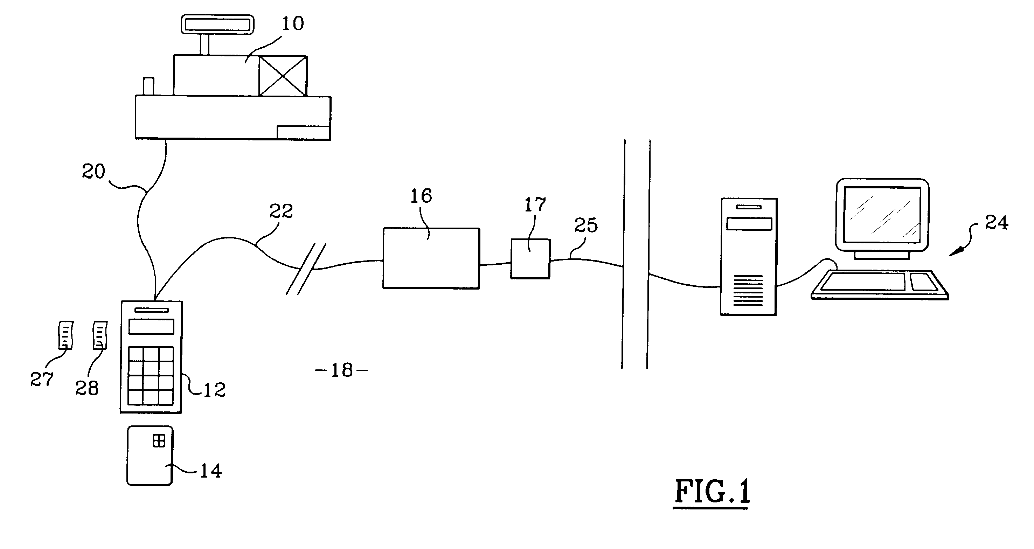

Sur la figure 1, on a représenté une caisse 10 équipée d'un Terminal de Paiement Electronique, dit TPE. Ce TPE est dit de caisse ou esclave. Il s'agit d'un lecteur/enregistreur 12 de carte à puce 14 détenue par un consommateur. Ce TPE est utilisé de façon connue pour le paiement par carte bancaire. Un tel TPE est relié à un concentrateur 16 qui est un TPE central ou maître auquel le TPE de caisse est raccordé. Ce concentrateur 16 est un centralisateur d'informations, situé dans l'enceinte 18 du magasin du distributeur qui pilote les différents TPE. Ce concentrateur 16 dispose d'une mémoire pour enregistrer les différentes données des TPE de caisse. Ce concentrateur 16 est relié à des moyens de liaison avec le réseau sous forme d'un serveur/modem 17.

On sait que les caisses et les TPE sont en réalité en nombre et ceci proportionnellement à la taille du distributeur mais pour la commodité et la clarté des explications, une seule caisse avec son TPE est représentée.

Le lecteur/enregistreur 12 de carte à puce est relié à la caisse par une première liaison 20 pour le paiement, ceci de façon connue, notamment pour permettre un affichage du prix sur le TPE à partir de la caisse et par une seconde liaison 22 en réseau au concentrateur 16 pour les échanges d'informations comme cela sera expliqué par la suite.

Les caisses sont également reliées au système informatique général mais ces connexions n'intéressent pas la présente invention.

Enfin sur la figure 1, on trouve aussi le centre 24 de traitement des informations qui est dans un lieu distinct de celui du magasin et sous la responsabilité d'une société extérieure.

Les liaisons 25 pour la circulation des informations sont représentées par un câble correspondant aux liaisons en ligne et par une disquette pour les liaisons sur supports transportables tels que des disques ou bandes.

On note également que le lecteur/enregistreur 12 de carte est doté de simples fonctions de comparaison sans aucun besoin d'un enregistrement en mémoire de l'ensemble des codes à barres de tous les produits existants, comme cela sera explicité ultérieurement.

Dans ce premier mode de réalisation, la carte 14 est du type programmée à l'avance, c'est-à-dire qu'elle comprend, en dehors des codes d'identification du porteur, des informations correspondant à des produits en promotion avec identification par leurs codes à barres respectifs, à des dates et à des valeurs de coupons.

Le concentrateur 16 est également un outil déjà existant dans l'enceinte du distributeur 18 car il est utilisé pour l'envoi des images chèques et des transactions cartes.

Ainsi le procédé de traitement des informations portées par la carte consiste en la succession des étapes suivantes :
1 - lecture des informations portées par la carte du consommateur après introduction dans le lecteur/enregistreur 12 du TPE, avant encaissement des produits, mise à jour des compteurs de fréquentation sur la carte 14
2 - encaissement par l'hôtesse de caisse des produits par lecture de leurs codes à barres à l'aide d'un système optique tel qu'un scanner, avec envoi de l'information du code du produit de chacun des produits encaissés vers le TPE. Le TPE effectue, au fur et à mesure, uniquement une comparaison du code à barres de ce produit en cours d'encaissement avec les codes à barres enregistrés sur la carte 14 qui correspondent à des produits bénéficiant d'une promotion et chargés temporairement dans le TPE par la lecture de la carte du consommateur ainsi qu'expliqué à l'étape 1.
3 - écriture en mémoire du TPE et/ou du concentrateur en plus d'une impression simultanée sur une bande double feuillets 27,28 de la valeur de réduction correspondant au produit pour lequel la comparaison a permis de révéler qu'il en bénéficiait ceci de façon indépendante des écritures caisse,
4 - fin des encaissements par lecture optique des produits achetés par le consommateur,
5 - édition par le TPE du récapitulatif des réductions avec un total des déductions, détachement des feuillets 27, 28 l'un pour le client, l'autre pour l'hôtesse de caisse,
6 - saisie sur la caisse par l'hôtesse de caisse de ce montant en déduction, et
7 - affichage du montant définitif à payer par le consommateur,
8 - paiement par tout moyen, notamment par carte bancaire, avec le même TPE, ceci de façon connue.

Le premier feuillet 27 de l'étape 5 est conservé par le consommateur pour un bon suivi des réductions et pour analyse éventuelle tandis que le second ticket 28 est conservé par l'hôtesse de caisse après son utilisation pour taper le montant de déduction en caisse.

Parallèlement, à la fin de chaque transaction, les différentes informations sont envoyées sur le concentrateur 16 qui stocke en mémoire le compte paiement par carte et les images chèques d'une part et le compte coupons de réduction d'autre part.

En fin de journée, à la fermeture du magasin, les informations centralisées sont envoyées en ligne ou sur support magnétique à l'extérieur de l'enceinte du distributeur dans la société de traitement 24 pour traitement de l'ensemble des informations et pour assurer les compensations.

On note que l'écart caisse réel peut être déterminé très rapidement puisque les comptes sont séparés, si bien que le distributeur peut clore très rapidement les comptes du magasin en disposant de toutes les répartitions.

Bien entendu, il est ensuite possible de réaliser des études statistiques sur les différents consommateurs en fonction de leurs achats et surtout des dates et des heures. A cette fin, on dispose plus particulièrement des données suivantes inscrites et mémorisées au sein du concentrateur 16 :
- date et heure de passage,
- identification du distributeur,
- identification du client,
- les codes des seuls produits sur lesquels il y a eu réduction,
- valeurs des compteurs internes de la carte pour déterminer le taux de fréquentation.

De ces données, il peut être tiré des enseignements pour suivre au mieux la clientèle et prévoir un meilleur fonctionnement de la distribution.

Selon une variante de l'invention, la carte 14 peut être chargée à l'entrée du magasin du distributeur ou dans le magasin sur des bornes prévues à cet effet.

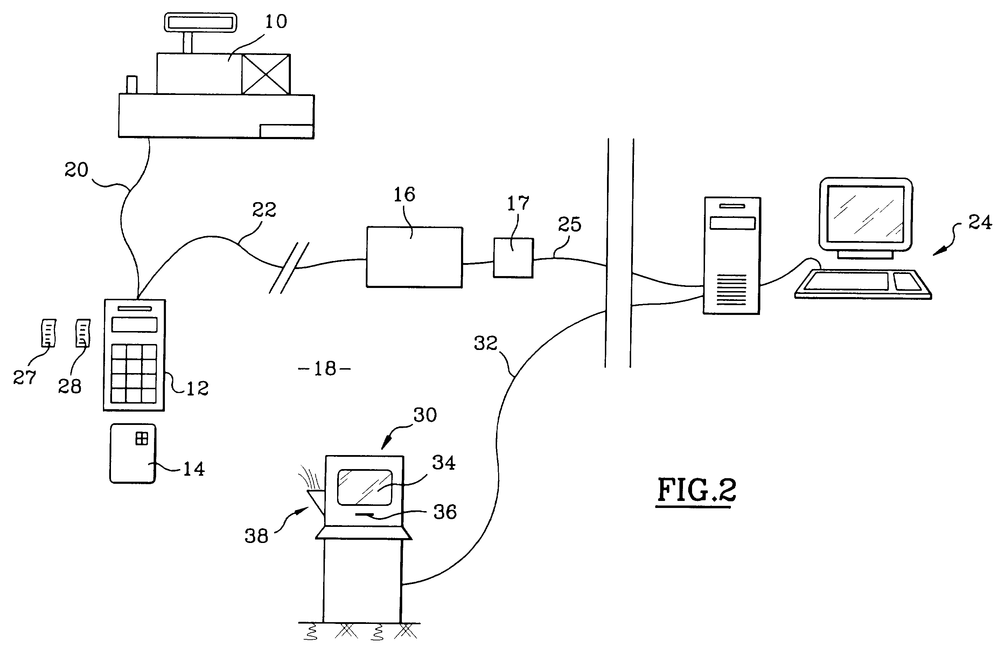

Sur la figure 2, on a ajouté une telle borne 30 au dispositif, sachant que, comme pour les caisses, leur nombre est multiplié en fonction des besoins.

Cette borne 30 est reliée, de préférence par câble 32, à la société extérieure qui gère les promotions et les coupons de réduction pour faciliter la mise à jour des produits susceptibles de bénéficier d'une réduction à la demande des donneurs d'ordre.

En effet, cette borne présente sur un écran 34, les différents produits sur lesquels des réductions ou autres avantages sont proposés. Elle comporte aussi un lecteur/enregistreur 36 de cartes 14, susceptible de lire et d'écrire, afin de charger les codes correspondant aux produits en promotion, tels que présentés à l'écran 34 ou éventuellement de façon complémentaire dans une brochure récapitulative si besoin est. Ces brochures sont alors en libre-service à la borne 30 elle-même, dans un réceptacle 38 prévu à cet effet.

Dans ce cas, la carte 14 peut être distribuée vierge ou préchargée au consommateur par tout moyen adapté chez lui ou au sein même du magasin, la réactualisation étant effectuée à la borne 30 à l'entrée du magasin, comme le souhaite le consommateur. Il convient de prévoir une date limite de validité pour assurer un meilleur suivi et une réactualisation des cartes en fonction de l'évolution de la technique.

On note aussi que par l'intermédiaire de la borne 30, il est possible de lancer une campagne très rapidement, ponctuellement sur un point de vente ou généralisée sur différents magasins d'un même distributeur.

On constate bien à travers la description qui vient d'être faite que le dispositif comprend un ajout de fonctions au système de TPE en réseau sans aucune modification du système de caisses.

Les fonctions ajoutées comprennent :
- l'identification des cartes,
- la lecture et l'écriture d'informations propres à ladite carte de bons de réduction,
- la mémorisation temporaire des codes des produits portés par la carte,
- la comparaison avec chaque code lu sur chaque produit durant l'encaissement,
- l'écriture de la valeur de réduction correspondante au produit en cas de codes à barres identiques à l'encaissement et en mémoire,
- totalisation des valeurs de réduction écrites et impression,
- mémorisation des informations nécessaires dans le concentrateur.

La borne est également un atout considérable pour un traitement rapide des informations à faire passer et des modifications à apporter. On peut ainsi lancer une campagne dans des délais très brefs et le distributeur n'est pas perturbé comme par les systèmes de l'art antérieur. Le gain de temps est fortement apprécié tant aux caisses elles-mêmes que par les instances chargées des comptes que par les sociétés extérieures de traitement qui peuvent rendre les résultats beaucoup plus tôt.

## Revendications

1. Procédé de traitement d'informations, plus particulièrement de bons de réduction, dans les magasins de distribution durant le passage en caisse (10) des achats d'un consommateur muni d'une carte à puce (14) portant en plus des informations d'identification, un ensemble de codes à barres correspondant à des produits bénéficiant de bons de réduction, ladite caisse (10) étant équipée d'un terminal de paiement électronique (12), TPE, pour les règlements par carte bancaire, caractérisé en ce qu'il comprend les étapes suivantes :
- introduction de la carte à puce (14) dans un TPE (12), pour lecture et mémorisation des informations portées par la puce de cette carte (14), notamment l'ensemble des codes à barres des produits bénéficiant de bons de réduction et les valeurs de ces bons,
- lecture au fur et à mesure des codes à barres des produits passant en caisse,
- comparaison des codes et, en cas d'identité du code à barres d'un produit passant en caisse et d'un code à barres mémorisé, écriture au moins de la référence du produit et de sa valeur de réduction,
- totalisation par le TPE (12) des valeurs de réduction en fin d'encaissement,
- émission d'au moins un feuillet (27,28) portant le total de réduction,
- report en caisse de ce total de réduction,
- émission du ticket de caisse avec déduction du total des réductions.
- mémorisation des différentes informations concernant cette transaction.

2. Procédé selon la revendication 1, caractérisé en ce qu'on émet un feuillet double (27, 28) portant le total de réduction.

3. Procédé selon la revendication 1 ou 2, caractérisé en ce qu'on lit les codes à barres des produits en caisse au moyen d'un lecteur optique et en ce que l'information lue est transmise simultanément vers la caisse (10) de façon connue mais aussi vers le TPE (12).

4. Procédé selon l'une quelconque des revendications précédentes, caractérisé en ce qu'on utilise le TPE (12) de règlement par carte bancaire existant dont on modifie les fonctions, à l'exclusion de toute modification du système caisse.

5. Dispositif de mise en oeuvre du procédé selon l'une quelconque des revendications 1 à 4, comprenant au moins une caisse enregistreuse avec des moyens de lecture optique des codes à barres des produits, au moins un TPE (12) pour les règlements par carte bancaire, associé par une première liaison (20) d'une part à ladite caisse (10) et par une seconde liaison (22) d'autre part à un réseau intégrant un concentrateur (16), caractérisé en ce que ledit TPE (12) relié au concentrateur (16) comprend des moyens supplémentaires de :
- lecture et mémorisation temporaire des informations portées par la puce d'une carte à puce (14) comprenant notamment des informations d'identification, des codes à barres de produits bénéficiant d'une réduction, des valeurs de réductions associées à chacun de ces codes à barres,
- réception des codes à barres des produits lus au cours de l'encaissement ,
- comparaison des codes à barres lus et des codes à barres mémorisés,
- écriture par le TPE (12), sur au moins un feuillet (27,28) de la référence du produit et de la valeur de réduction correspondante, en cas d'identité des deux codes lu et mémorisé, et
- totalisation de ces valeurs de réduction en fin de feuillet, à la fin de l'encaissement.

6. Dispositif selon la revendication 5, caractérisé en ce qu'il comprend au moins une borne (30), disposée de préférence à l'entrée du magasin de distribution et indépendante des réseaux internes, qui comprend un lecteur/enregistreur (36) de cartes à puce (14), susceptible de lire et d'écrire, afin de charger sur lesdites cartes à puce (14) les codes correspondant aux produits en promotion.

7. Dispositif selon la revendication 6, caractérisé en ce que la borne comprend des moyens de liaison avec un centre (24) délocalisé qui gère et met à jour le contenu de la mémoire de la borne.
